# EUROPEAN PATENT APPLICATION

(11) **EP 3 086 205 A1**
(43) Date of publication of application: **26.10.2016**
(21) Application number: 16166388.5
(22) Date of filing: 21.04.2016
(51) Int. Cl.: G06F 3/01, G06F 3/03

(54) **METHOD AND APPARATUS FOR IDENTIFYING OPERATION EVENT**

(30) Priority: 21.04.2015 CN 201510189846
(71) Applicant: Le Shi Zhi Xin Electronic Technology (Tianjin) Limited, Beijing 100025 (CN)
(72) Inventor: HU, Xuelian, Beijing 100025 (CN)
(74) Representative: Cohausz & Florack

(57) **Abstract**

The disclosure discloses a method and apparatus for identifying an operation event. The method includes: obtaining sample points of a moving target object; fitting a preset number N of points in a list of fit points to a fit curve; determining whether the distance between each of the sample points and the fit curve is above a preset first threshold; if the distance between the sample point and the fit curve is above the first threshold, then mapping the sample point onto the fit curve to obtain a mapped point of the sample point on the fit curve, and storing the mapped point into the list of fit points, and if the distance between the sample point and the fit curve is below or equal to the first threshold, then storing the sample point into the list of fit points; and identifying the operation event of the target object from the points in the list of fit points. With the disclosure, a dithering point of the moving target object can be replaced by a point on the fit curve to thereby eliminate dithering and improve the accuracy of identifying the operation event.

## Description

### Field

The present disclosure relates to the field of identifying a pattern and particularly to a method and apparatus for identifying an operation event.

### Background

Smart TVs are a kind of smart multimedia terminals emerging in response to the trend of "high-definition", "network-enabled", and "smart" TVs, and as the smart TVs are evolving, gestures have been increasingly widely applied in manipulating the smart TVs, and the smart TVs are manipulated using the gestures to provide users with convenient and better experiences of the users.

A smart TV is manipulated using a gesture by firstly generating a gesture locus from hand points of a moving hand, and then identifying the locus, and controlling the smart TV according to the identified locus. When the gesture locus is generated from the hand points, the gesture may be identified inaccurately from the generated gesture locus because the hand tends to dither upward and downward.

Alike the same problem may arise if the smart TV is controlled using a joystick or another operating instrument to operate, so the operation event may be identified inaccurately from the generated movement locus which is not smooth due to the dithering joystick.

There has been absent so far a working solution to the problem of inaccurate identification of the operation event in the prior art.

### Summary

A general object of the disclosure is to provide a method and apparatus for identifying an operation event so as to address the problem of inaccurate event of the operation event in the prior art.

According to an aspect of the disclosure, there is provided a method for identifying an operation event, the method including: obtaining sample points of a moving target object; fitting a preset number N of points in a list of fit points to a fit curve; determining whether the distance between each of the sample points and the fit curve is above a preset first threshold; if the distance between the sample point and the fit curve is above the first threshold, then mapping the sample point onto the fit curve to obtain a mapped point of the sample point on the fit curve, and storing the mapped point into the list of fit points, and if the distance between the sample point and the fit curve is below or equal to the first threshold, then storing the sample point into the list of fit points; and identifying the operation event of the target object from the points in the list of fit points.

Furthermore fitting the preset number N of points to the fit curve includes: fitting the (n+1)-th point to the (N+n)-th point in the list of fit points to a fit curve, wherein n is a natural number.

Furthermore fitting the preset number N of points to the fit curve includes: fitting the (nm+1)-th point to the (N+nm)-th point in the list of fit points to a fit curve, wherein both n and m are natural numbers more than 0, and 0<m≤N.

Furthermore the fit curve is a curve to which the points are fit in the Least Square method.

Furthermore the points in the list of fit points include coordinate information in a three-dimension coordinate system.

Furthermore determining whether the distance between each of the sample points and the fit curve is above the preset first threshold includes: eliminating the coordinates, on one corresponding coordinate axis, of the three-dimension coordinates of the fit curve and the sample point to obtain projections onto a two-dimension plane; and determining whether the distance between the projection of the sample point, and the projection of the fit curve, onto the two-dimension plane is above the first threshold.

Furthermore if the distance between the sample point and the fit curve is above the first threshold, then mapping the sample point onto the fit curve to obtain the mapped point of the sample point on the fit curve includes: substituting the coordinate on the coordinate axis corresponding to the movement direction of the target object among the two-dimension coordinates of the projection of the sample point onto the two-dimension plane, into a fit curve function to obtain the mapped point.

According to an aspect of the disclosure, there is provided an apparatus for identifying an operation event, the apparatus including: an obtaining module configured to obtain sample points of a moving target object; a fitting module configured to fit a preset number N of points in a list of fit points to a fit curve; a determining module configured to determine whether the distance between each of the sample points and the fit curve is above a preset first threshold; a first processing module configured, if the distance between the sample point and the fit curve is above the first threshold, to map the sample point onto the fit curve to obtain a mapped point of the sample point on the fit curve, and to store the mapped point into the list of fit points; a second processing module configured, if the distance between the sample point and the fit curve is below or equal to the first threshold, to store the sample point into the list of fit points; and an identifying module configured to identify the operation event of the target object from the points in the list of fit points.

Furthermore the fitting module is configured to fit the (n+1)-th point to the (N+n)-th point in the list of fit points to a fit curve, wherein n is a natural number.

Furthermore the fitting module is configured to fit the (nm+1)-th point to the (N+nm)-th point in the list of fit points to a fit curve, wherein both n and m are natural numbers more than 0, and 0<m≤N; and nm represents the product of n and m.

Furthermore the fit curve is a curve to which the points are fit in the Least Square method.

Furthermore the points in the list of fit points include coordinate information in a three-dimension coordinate system.

Furthermore the determining module includes: a coordinate processing sub-module configured to eliminate the coordinates, on one corresponding coordinate axis, of the three-dimension coordinates of the fit curve and the sample point to obtain projections onto a two-dimension plane; and a determining sub-module configured to determine whether the distance between the projection of the sample point, and the projection of the fit curve, onto the two-dimension plane is above the first threshold.

Furthermore the first processing module is configured to substitute the coordinate on the coordinate axis corresponding to the movement direction of the target object among the two-dimension coordinates of the projection of the sample point onto the two-dimension plane, into a fit curve function to obtain the mapped point.

According to an aspect of the disclosure, there is provided a non-transitory computer-readable medium with at least one instruction stored therein, wherein the at least one instruction is configured to, when executed by at least one processor of an apparatus, cause the apparatus to perform: obtaining sample points of a moving target object; fitting a preset number N of points in a list of fit points to a fit curve; determining whether the distance between each of the sample points and the fit curve is above a preset first threshold; if the distance between a sample point and the fit curve is above the first threshold, then mapping the sample point onto the fit curve to obtain a mapped point of the sample point on the fit curve, and storing the mapped point into the list of fit points, and if the distance between the sample point and the fit curve is below or equal to the first threshold, then storing the sample point into the list of fit points; and identifying the operation event of the target object from the points in the list of fit points.

With the disclosure, after the sample points of the moving target object are acquired, the sample points are smoothed to thereby eliminate dithering, and finally the operation event of the target object is identified from the processed sample points. Particularly after the sample points are acquired, a preset number N of points in the list of fit points are fit to the fit curve, it is determined whether the distance between each of the sample points and the fit curve is above the preset first threshold, and if the distance between the sample point and the fit curve is above the first threshold, then the sample point is mapped onto the fit curve to obtain the mapped point of the sample point on the fit curve, and the mapped point is stored into the list of fit points; or if the distance between the sample point and the fit curve is below or equal to the first threshold, then the sample point is stored into the list of fit points, and the operation event of the target object is identified from the points in the list of fit points, so that if the distance between the acquired sample point and the fit curve is above the first threshold, that is, the target objects dithers due to an manual operation, then the dithering point can be replaced by the point on the fit curve to thereby eliminate dithering so as to improve the accuracy of identifying the operation event.

The foregoing description merely presents a summary of the technical solutions according to the embodiments of the disclosure, and in order to make the inventive technical solutions more apparent, and enable them to be put into practice according to the disclosure of the description, and in order to make the foregoing and other objects, features and advantages of the disclosure more apparent and readily understood, particular embodiments of the disclosure will be exemplified below.

### Brief Description of the Drawings

Various other advantages and benefits of the disclosure will become apparent to those ordinarily skilled in the art upon review of the following detailed description of preferred embodiments thereof. The drawings are merely intended to illustrate the preferred embodiments of the disclosure but not intended to limit the scope of the disclosure. Like reference numerals will denote like components throughout the drawings in which:
Fig.1 is a flow chart of a method for identifying an operation event according to a first embodiment of the disclosure;
Fig.2 is a flow chart of a method for identifying an operation event according to a second embodiment of the disclosure;
Fig.3 is a block diagram of an apparatus for identifying an operation event according to a fifth embodiment of the disclosure; and
Fig.4 is a block diagram of an apparatus for identifying an operation event according to a sixth embodiment of the disclosure.

### Detailed Description of the Embodiments

The disclosure will be further described below with reference to the drawings and particular embodiments thereof. It shall be noted that the embodiments of the disclosure, and the features of the embodiments may be combined with each other unless they conflict with each other.

An embodiment of the disclosure provides a method for identifying an operation event, which is applicable to a smart terminal, e.g., a smart TV, etc. The smart terminal is connected with a monitor to obtain positional information of a target object, and the monitor may be any device in the prior art capable of identifying three-dimension data in a three-dimension space, e.g., a somato-sensory camera, or a spatial position sensor capable of obtaining positional information of the target object, e.g., an infrared camera. The monitor may be USB connected with the smart terminal, or may be installed on the smart terminal. The monitor capturing the target object may acquire and identify image data of the target object, analyze the positional information of the target object, and send the positional information to the smart terminal; or may send the acquired image data to the smart terminal directly, and the smart terminal may identify the image data for the positional information of the target object; or may obtain the positional information of the target object from an infrared detector and a laser ranger of the spatial position sensor.

In an embodiment of the disclosure, the positional information may alternatively be obtained by identifying the target object in the image using an existing image identification algorithm, e.g., Linect, PrimeSense, TOF, etc., to obtain point information of the target object in the three-dimension coordinate system, so a repeated description thereof will be omitted here.

In an embodiment of the disclosure, such a process will be described that sample points of the moving target object are smoothed, and an operation event of the target object is identified from the processed sample points, where the process can be useful in controlling a smart TV; and dithering of the target object can be eliminated in identifying the operation event to thereby improve the accuracy of identifying the operation event and the reliability of controlling the smart TV.

It shall be noted that the order of the steps in the following respective embodiments will not be limited to the steps which are numbered.

### First Embodiment

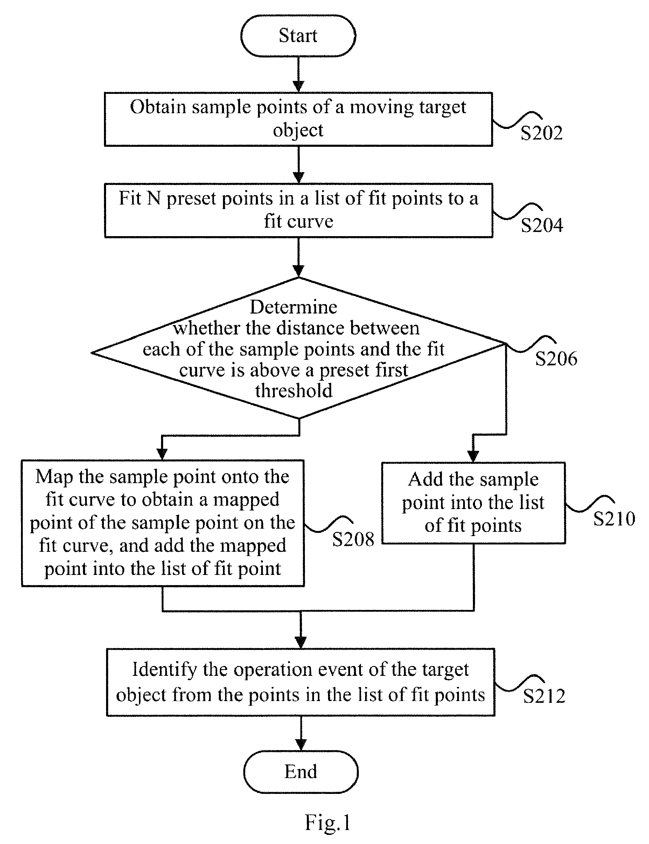

The first embodiment of the disclosure provides a method for identifying an operation event, which generally relates to a process of obtaining sample points of a moving target object, smoothing and then adding the sample points to a list of fit points, and finally identifying the operation event of the target object from the points in the list of fit points, and referring to Fig.1, the method may include the following steps:
The step S202 is to obtain sample points of a moving target object.

Particularly the target object in the embodiment may be a hand, the head or another part of a human operator, or may be another instrument carried by the human operator, e.g., a joystick, a game stick, a sensing glove, etc. While the target object is moving, positions of the target object are sampled to obtain the sample points of the moving target object where the sample points are typically obtained sequentially at some interval of time, for example, a sample point is obtained every 0.1 second; and the interval of time may be set as required for a system, for example, if the operation event of the target object needs to be identified more accurately, then the interval of time will be set shorter; otherwise, the interval of time will be set longer; or the interval of time may be set dependent upon the performance of a monitor, a data processor, etc., for example, if an identifying device or the data processor has a higher processing capacity and operating speed, then the interval of time will be set shorter.

The step S204 is to fit N preset points in a list of fit points to a fit curve.

The points in the list of fit points include sample points satisfying a preset condition, and mapped points of smoothed sample points which do not satisfy the preset condition. If some of the points have not been initially fit to the curve, then the sampled sample points will be stored into the list of fit points until the number of points in the list of fit points reaches N, and the points will be fit to the curve; and if there is an existing fit curve, then the flow will proceed to the step S206 to the step S210 to store the sample points satisfying the preset condition into the list of fit points, and to smooth the sample points which do not satisfy the preset condition, and to store the mapped points into the list of fit points.

Particularly if the number of initially obtained sample points is less than N, then each obtained sample point will be stored into the list of fit point, and if the N-th sample point is obtained, then the N-th sample point will be stored into the list of fit points, and the N points will be initially fit to the curve. After the points are initially fit to the curve, if new points are added to the list of fit points, then the points will be fit to a curve each time one of the new points is added, that is, each time a new point is added, the latest N points in the list of fit points will be fit to a curve, particularly as follows: if the N-th point is acquired, then the first point to the N-th point will be fit to a curve; if the (N+1)-th point is acquired, the second point to the (N+1)-th point will be fit to a curve; if the (N+2)-th point is acquired, the third point to the (N+2)-th point will be fit to a curve; and so on, that is, the (n+1)-th point to the (N+n)-th point will be fit to a curve in this method, where n is a natural number.

Alternatively after the points are initially fit to the curve, if the number of new points added to the list of fit points reaches a preset number m, then the points will be further fit to a curve, or if the number of newly added points is less than the preset number m, then the first m points will not be fit to any curve. That is, given m representing a fitting step, if a new point in the list of fit points reaches the fitting step, then the points will be fit to a curve, for example, if m is more than 1, then the first N points in the list of fit points will be initially fit to a curve; if a new point in the list of fit points is the (N+1)-th point, then the first point to the N-th point in the list of fit points will not be fit to any curve; if a new point in the list of fit points reaches the first fitting step, that is, the new point in the list of fit points reaches the (N+m)-th point, then the (m+1)-th point to the (N+m)-th point in the list of fit points will be fit to a curve; if a new point in the list of fit points reaches the second fitting step, that is, the new point in the list of fit points reaches the (N+2m)-th point, then the (2m+1)-th point to the (N+2m)-th point in the list of fit points will be fit to a curve; if a new point in the list of fit points reaches the third fitting step, that is, the new point in the list of fit points reaches the (N+3m)-th point, then the (3m+1)-th point to the (N+3m)-th point in the list of fit points will be fit to a curve; and so on. That is, if a new point in the list of fit points reaches the (N+nm)-th point, then the (nm+1)-th point to the (N+nm)-th point in the list of fit points will be fit to a curve in this method, where both n and m are natural numbers more than 0, and 0<m≤N; and nm represents the product of n and m.

In some embodiments, the points are fit to the curve in the step S204 in the Least Square method to thereby improve the accuracy of fitting the points to the curve.

Here in order to better reflect the position of the target object, a three-dimension coordinate system is created at the position of the monitor in the disclosure; and the sample points obtained in this embodiment include coordinate information (x, y, z) of the target object in the three-dimension coordinate system, and the points in the list of fit points include the coordinate information of the target object in the three-dimension coordinate system.

The step S206 is to determine whether the distance between each of the sample points and the fit curve is above a preset first threshold.

For each of the sample point, it is determined in this step whether the distance between the sample point and the latest fit curve is above the preset first threshold to thereby determine whether the sample point is a singular point, and if the distance between the sample point and the latest fit curve is above the preset first threshold, then the sample point will be determined as a singular point, that is, the sample point is a dithering point due to the dithering hand of the human operator or another reason; otherwise, the sample point will be determined as a normal sample point. If the sample point is determined as a singular point, then the flow will proceed to the step S208; and if the sample point is determined as a normal sample point, then the flow will proceed to the step S210.

Particularly the step S206 is performed by firstly eliminating the coordinates, on one corresponding coordinate axis, among the three-dimension coordinate information of the sample points, and the respective points in the fit curve to obtain projections of the sample points, and the respective points in the fit curve onto a two-dimension plane of the two-dimension coordinates, and then determining whether the distance between the projection of the sample point, and the projection of the fit curve, onto the two-dimension plane is above the first threshold.

The step S208 is, if the distance between the sample point and the fit curve is above the first threshold, to map the sample point onto the fit curve to obtain a mapped point of the sample point on the fit curve, and to add the mapped point into the list of fit point.

If the sample point is a singular point, then in this step, the sample point will be mapped onto the fit curve to obtain the mapped point of the sample point on the fit curve, and the sample point can be replaced by the mapped point, so that the singular point occurring while the target object is moving can be eliminated to thereby smooth a movement locus of the target object.

Particularly in S206, the coordinates, on one corresponding coordinate axis, among the three-dimension coordinate information of the sample points, and the respective points in the fit curve are eliminated to obtain the two-dimension coordinates of the sample points, and the respective points in the fit curve, i.e., the projections of the sample points and the fit curve onto the two-dimension plane, the coordinates on the coordinate axis of the movement direction of the target object, corresponding to the two-dimension coordinates of the sample points are substituted into a fit curve function to obtain the mapped points of the sample points, where the sample points include the coordinate information in the three-dimension coordinate system, and the coordinate information of the mapped points are stored into the list of fit points.

The step S210 is, if the distance between the sample point and the fit curve is below or equal to the first threshold, to add the sample point into the list of fit points.

After the determination is made in the step S206 for each of the sample points, the process in the step S208 or the step S210 is further performed so that a point is added to the list of fit points, where any one of the points in the list of fit points is the sample point of the moving target object, or the mapped point corresponding to the sample point.

The step S212 is to identify the operation event of the target object from the points in the list of fit points.

The operation event of the target object may be identified from the points in the list of fit points by firstly generating a movement locus of the target object from the points in the list of fit points, particularly generating the movement locus in real time from the points in the list of fit points while sampling, or generating the movement locus in real time from the points in the list of fit points after sampling is finished, and finally identifying the operation event of the target object from the generated movement locus.

In some embodiments, it may be determined as follows whether sampling is finished:
If the distances between a second preset number of consecutive adjacent sample points are below a preset second threshold, then it may be determined that sampling is finished, that is, one operation event is finished, and at this time, the movement locus may be generated from the points in the list of fit points; or if the distances between the adjacent sample points are below the second threshold across a preset number of consecutive periods of time, then it may be determined that sampling is finished, that is, one operation event is finished, and at this time, the movement locus may be generated from the points in the list of fit points.

With the method for identifying an operation event according to this embodiment, the singular points among the sample points can be eliminated to thereby remove dithering occurring in operation and improve the accuracy of identifying the operation event.

### Second Embodiment

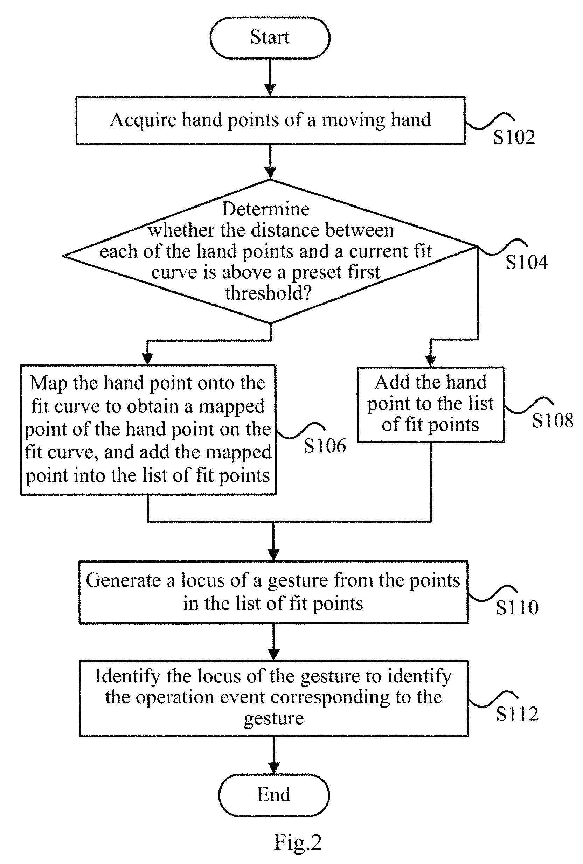

The second embodiment of the disclosure provides a method for identifying an operation event, which generally relates to a process of acquiring hand points of a moving hand of a user, generating a locus of a gesture from the acquired hand points, and further identifying the locus of the gesture to identify the operation event, and referring to Fig.2, the method may include the following steps:
The step S102 is to acquire hand points of a moving hand.

After the hand starts to move, the hand points are acquired at a predetermined acquisition frequency, e.g., 30 points per second. The acquired hand points may be represented as three-dimension Cartesian coordinates (x, y, z), that is, 30 hand points represented as the three-dimension Cartesian coordinates (x, y, z) may be acquired per second.

The step S104 is to determine whether the distance between each of the hand points and a current fit curve is above a preset first threshold.

For each of the acquired hand points, the distance between the hand point and the current fit curve is calculated, it is determined whether the distance is above the preset first threshold, and if the distance is above the first threshold, then the flow proceeds to the step S106; otherwise, the flow proceeds to the step S108.

Here the current fit curve is a curve to which a first preset number of points in the list of fit points are fit, particularly in any one of the curve fitting methods in the prior art. For example, at a preset interval of time or each time a predetermined number of points are added to the list of fit points, a module or a unit performing fitting the points to a curve fits the first preset number of latest points in the list of fit points to a curve in the Least Square method, so that for each of the acquired hand points, the latest fit curve is the current fit curve of the hand point. Particularly, for example, each time five points are added to the list of fit points, the module or the unit fitting the points to a curve fits the 10 latest points in the list of fit points to a curve.

The distance between the hand point and the current fit curve will be calculated by mapping the hand points to a plane where the fit curve lies, which may be a plane where a screen of a controlled smart TV lies in some embodiments. For example, if the plane where the screen of the controlled smart TV lies is a vertical plane, and the acquired hand points are represented as three-dimension Cartesian coordinates (x, y, z), then firstly the z coordinate among the three-dimension Cartesian coordinates (x, y, z) of the hand point will be eliminated resulting in the two-dimension coordinates (x, y) of the hand point, that is, the hand point is mapped to the vertical plane.

The step S106 is, if the distance between the hand point and the fit curve is above the first threshold, to map the hand point onto the fit curve to obtain a mapped point of the hand point on the fit curve, and to add the mapped point into the list of fit points.

As compared with a hand point acquired while the hand is not dithering, a hand point acquired while the hand is dithering will significantly deviate from a normal gesture locus, so if it is determined that the distance between the hand point and the fit curve is above the first threshold, then the hand point will be a hand point acquired while the hand is dithering, and at this time, the hand point will be mapped onto the fit curve, and replaced by the mapped point of the hand point on the fit curve, and the mapped point will be added into the list of fit points, thus eliminating dithering of the hand.

Here the hand point may be mapped onto the fit curve by substituting one of the coordinates of the hand point, e.g., the x coordinate among the two-dimension coordinates of the hand point, into an expression y=f(x) of the fit curve to obtain a y value, so that the x coordinate among the two-dimension coordinates of the hand point, and the y value constitute the coordinates of the mapped point corresponding to the hand point, thus eliminating dithering of the hand.

The step S108 is, if the distance between the hand point and the fit curve is below or equal to the first threshold, to add the hand point to the list of fit points.

If it is determined that the distance between the hand point and the fit curve is below or equal to the first threshold, then the hand point will not be a hand point acquired while the hand is dithering, and at this time, the hand point will be added directly to the list of fit point.

The step S110 is to generate a locus of a gesture from the points in the list of fit points.

After the hand points are acquired, the curve is generated from the points in the list of fit points as the locus of the gesture. Alternatively a part of the locus of the gesture is generated from the points in the current list of fit points and displayed in real time, so that the user can see the gesture received by the smart TV in real time.

In some embodiments, for each of the acquired hand points, the distance between the hand point and a preceding adjacent hand point is determined, if the distance is below a preset second threshold, then counting is started, and if the distances between a second preset number of consecutive adjacent hand points are below the preset second threshold, or the distances between the adjacent hand points are below the second threshold across a preset number of periods of time, which indicates that the hand is stopped from dithering, then the locus of the gesture is generated from the points in the list of fit points.

The step S112 is to identify the locus of the gesture to identify the operation event corresponding to the gesture.

With the method for identifying an operation event according to this embodiment, after each of the hand points is acquired, it is determined whether the distance between the hand point and the current fit curve is above the preset first threshold to thereby determine whether the hand point is a hand point acquired while the hand is dithering; and if the distance between the hand point and the fit curve is above the first threshold, that is, the hand point is a hand point acquired while the hand is dithering, then the mapped point of the hand point on the fit curve is added to the list of fit point instead of the hand point, or if the distance between the hand point and the fit curve is below or equal to the first threshold, that is, the hand point is not a hand point acquired while the hand is dithering, then the hand points is added directly to the list of fit points; and finally the locus of the gesture is generated from the points in the list of fit points, and identified to thereby identify the operation event, so that while the hand is dithering, the dithering points can be replaced by the points on the fit curve to thereby eliminate dithering of the hand so as to smooth the dithering hand points, thus making the generated locus of the gesture more smooth, and further improving the accuracy of identifying the gesture, so this method can be applicable to various use scenarios of the user, for example, the user can manipulate conveniently in a somato-sensory manner using his or her gesture regardless of a long or short distance of a sofa from the smart TV.

Here if the number of acquired hand points is less than the first preset number, then the number of hand points may not be sufficient for fitting to a curve, so the acquired hand points may be add directly to the list of fit points; and if the number of acquired hand points is more than or equal to the first preset number, then the first preset number of points in the list of fit points will be fit to a curve.

### Third Embodiment

The third embodiment of the disclosure provides a method for identifying an operation event, which generally relates to a process of acquiring hand points of a moving hand of a user to obtain sample points, generating a locus of a gesture from the sample points, and further identifying the operation event from the locus of the gesture, where the method may include the following steps:
The step S302 is to put 10 acquired sample points directly to a list of fit points;
The step S304 is, if the 11^{th} sample point is acquired, to fit the latest 10 points in the list of fit points (i.e., the 10 acquired sample points) to a first fit curve;
The step S306 is to determine the distance between the 11^{th} sample point and the first fit curve is above a threshold, and if so, to map the 11^{th} sample point to the first fit curve to obtain a mapped point, and to add the mapped point to the list of fit points; otherwise, to add the 11^{th} sample point directly to the list of fit points;
The step S308 is, if the 12^{th} sample point is acquired. to fit the latest 10 points in the list of fit points (i.e., the acquired sample points 2 to 10, and the 11-th sample point or the mapped point thereof) to a second fit curve;
The step S310 is to determine the distance between the 12^{th} sample point and the second fit curve is above the threshold, and if so, to map the 12^{th} sample point to the second fit curve to obtain a mapped point, and to add the mapped point to the list of fit points; otherwise, to add the 12^{th} sample point directly to the list of fit points;
The step S312 is to repeat the process above until completion of sampling, and to generate a locus of a gesture from all the points in the list of fit points; and
The step S314 is to identify the locus of the gesture to identify the operation event corresponding to the gesture.

For example, a correspondence relationship between louses of gestures and operation events are stored in advance, and the generated locus of the gesture is identified by matching the locus of the gesture against with the correspondence relationship stored in advance, so that an operation event in the matching correspondence relationship is the operation event corresponding to the locus of the gesture.

### Fourth Embodiment

The fourth embodiment of the disclosure provides a method for identifying an operation event, which generally relates to a process of acquiring hand points of a moving hand of a user to obtain sample points, generating a locus of a gesture from the sample points, and further identifying the operation event from the locus of the gesture, where the method may include the following steps:
The step S402 is to put 10 acquired sample points directly to a list of fit points;
The step S404 is, if the 11^{th} sample point is acquired, to fit the latest 10 points in the list of fit points (i.e., the 10 acquired sample points) to a first fit curve;
The step S406 is to determine the distance between the 11^{th} sample point and the first fit curve is above a threshold, and if so, to map the 11^{th} sample point to the first fit curve to obtain a mapped point, and to add the mapped point to the list of fit points; otherwise, to add the 11^{th} sample point directly to the list of fit points;
The step S408 is, if the 12^{th} sample point is acquired, not to fit the points to any curve;
The step S410 is to determine the distance between the 12^{th} sample point and the second fit curve is above the threshold, and if so, to map the 12^{th} sample point to the second fit curve to obtain a mapped point, and to add the mapped point to the list of fit points; otherwise, to add the 12^{th} sample point directly to the list of fit points;
The step S412 is, if the 13^{th} to 15^{th} sample points are acquired, to proceed in the same way as the 12^{th} sample point;
The step S414 is, if the 16^{th} sample point is acquired, to fit the latest 10 points in the list of fit points (i.e., the acquired sample points 6 to 10, and the 11^{th} to 15^{th} sample points or the mapping points thereof) to a second fit curve;
The step S416 is to determine the distance between the 16^{th} sample point and the second fit curve is above the threshold, and if so, to map the 16^{th} sample point to the second fit curve to obtain a mapped point, and to add the mapped point to the list of fit points; otherwise, to add the 16^{th} sample point directly to the list of fit points;
The step S418 is, if the 17^{th} sample point is acquired, not to fit the points to any curve;
The step S420 is to determine the distance between the 17^{th} sample point and the second fit curve is above the threshold, and if so, to map the 17^{th} sample point to the second fit curve to obtain a mapped point, and to add the mapped point to the list of fit points; otherwise, to add the 17^{th} sample point directly to the list of fit points;
The step S422 is, if the 18^{th} to 20^{th} sample points are acquired, to proceed in the same way as the 17^{th} sample point;
The step S424 is to repeat the process above until completion of sampling, and to generate a locus of a gesture from all the points in the list of fit points; and
The step S426 is to identify the locus of the gesture to identify the operation event corresponding to the gesture.

The method for identifying an operation event according to the embodiments of the disclosure has been described above, and apparatuses for identifying an operation event according to embodiments of the disclosure will be described below; and it shall be noted that any one of the apparatuses for identifying an operation event according to embodiments of the disclosure can perform the method for identifying an operation event according to the embodiments of the disclosure.

### Fifth Embodiment

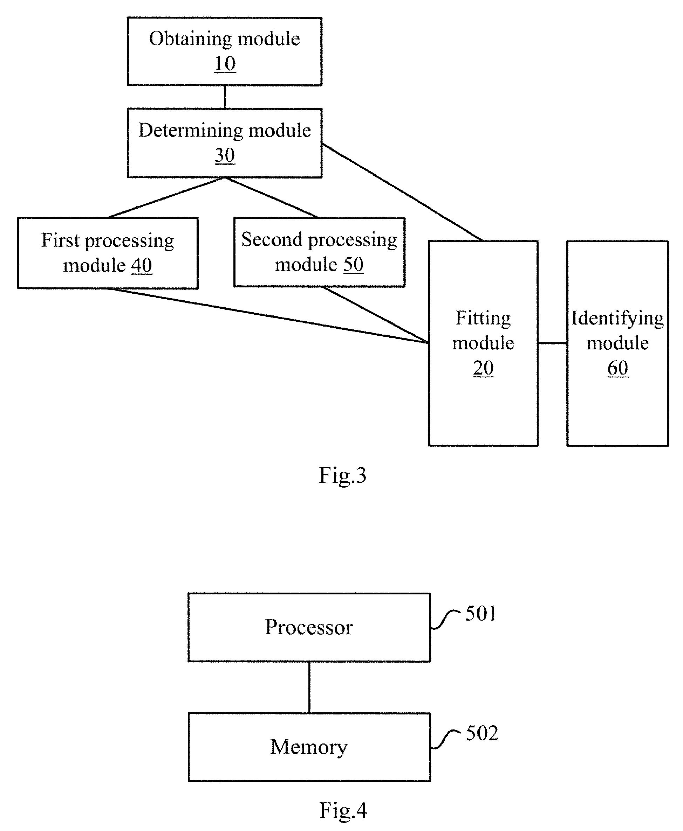

Fig.3 is a block diagram of an apparatus for identifying an operation event according to an embodiment of the disclosure, and as illustrated in Fig.3, the apparatus for identifying an operation event includes an acquiring module 10, a fitting module 20, a determining module 30, a first processing module 40, a second processing module 50, and an identifying module 60, where:

The acquiring module 10 is configured to obtain sample points of a moving target object, for example, to acquire the hand points of the moving hand at a predetermined acquisition frequency, e.g., 30 points per second. The acquired hand points may be represented as three-dimension Cartesian coordinates (x, y, z), that is, 30 hand points represented as the three-dimension Cartesian coordinates (x, y, z) may be acquired per second.

The fitting module 20 is configured to fit a preset number N of points in a list of fit points to a fit curve, where the points in the list of fit points may be the hand points or mapped points corresponding to the hand points, particularly by the first processing module and the second processing module adding the points to the list of fit points. The fitting module 20 may fit the points to the curve in the Least Square method. For example, at a preset interval of time or each time a predetermined number of points are added to the list of fit points, the fitting module 20 fits the N points in the list of fit points to the curve in the Least Square method, so that for each of the acquired hand points, the latest fit curve is the current fit curve of the hand point. Particularly, for example, each time five points are added to the list of fit points, the fitting module 20 fits the 10 latest points in the list of fit points to a curve.

The determining module 30 is configured to determine whether the distance between each of the sample points and the fit curve is above a preset first threshold. For each of the acquired sample points, i.e., hand points, the determining module 30 calculates the distance between the hand point and the current fit curve, and determines whether the distance is above the preset first threshold, where the distance between the hand point and the current fit curve is calculated by mapping the hand point to a plane where the fit curve lies, which may be a plane where a screen of a controlled smart TV lies in some embodiments. For example, if the plane where the screen of the controlled smart TV lies is a vertical plane, and the acquired hand points are represented as three-dimension Cartesian coordinates (x, y, z), then firstly the z coordinate among the three-dimension Cartesian coordinates (x, y, z) of the hand point will be eliminated resulting in the two-dimension coordinates (x, y) of the hand point, that is, the hand point is mapped to the vertical plane.

If the distance between the sample point and the fit curve is above the first threshold, then the first processing module 40 is configured to map the sample point onto the fit curve to obtain the mapped point of the sample point on the fit curve, and to add the mapped point into the list of fit points. As compared with a hand point acquired while the hand is not dithering, a hand point acquired while the hand is dithering will significantly deviate from a normal gesture locus, so if the determining module 30 determines that the distance between the hand point and the fit curve is above the first threshold, then the hand point will be a hand point acquired while the hand is dithering, and at this time, the hand point will be mapped onto the fit curve, and replaced by the mapped point of the hand point on the fit curve, and the mapped point will be added into the list of fit points, thus eliminating dithering of the hand. Here the hand point may be mapped onto the fit curve by substituting one of the coordinates of the hand point, e.g., the x coordinate among the two-dimension coordinates of the hand point, into an expression y=f(x) of the fit curve to obtain a y value, so that the x coordinate among the two-dimension coordinates of the hand point, and the y value constitute the coordinates of the mapped point corresponding to the hand point, thus eliminating dithering of the hand.

If the distance between the sample point and the fit curve is below or equal to the first threshold, then the second processing module 50 is configured to add the sample point to the list of fit points, which indicates that the hand point is not a hand point acquired while the hand is dithering, and at this time, the second processing module 50 is configured to add the hand point directly to the list of fit points.

The identifying module 60 is configured to generate a locus of a gesture from the points in the list of fit points, particularly by firstly generating a movement locus of a target object, e.g., the locus of the gesture, from the points in the list of fit points, and then identifying the movement locus to thereby identify the operation event of the target object.

With the apparatus for identifying an operation event according to this embodiment, after the acquiring module 10 each of the sample points, the determining module 30 determines whether the distance between the sample point and the fit curve is above the preset first threshold to thereby determine whether the sample point is a singular point to be processed; and if the distance between the sample point and the fit curve is above the first threshold, that is, the sample point is a singular point to be processed, then the first processing module 40 adds the mapped point of the sample point on the fit curve to the list of fit point instead of the sample point, or if the distance between the sample point and the fit curve is below or equal to the first threshold, that is, the sample point is not a singular point to be processed, then the second processing module 50 adds the sample point directly to the list of fit points; and finally the identifying module 60 identifies the operation event of the target object from the points in the list of fit points, so that while the hand is dithering, the dithering points can be replaced by the points on the fit curve to thereby eliminate dithering of the hand so as to smooth the dithering hand points and improve the accuracy of identifying the gesture, so this apparatus can be applicable to various use scenarios of the user, for example, the user can manipulate conveniently in a somato-sensory manner using his or her gesture regardless of a long or short distance of a sofa from the smart TV.

In some embodiments, the fitting module 20 is configured to fit the (n+1)-th point to the (N+n)-th point in the list of fit points to a fit curve, where n is a natural number. That is, each time a sample point is acquired, the points will be fit to a curve, and with this preferred embodiment, the accuracy of the identifying apparatus can be improved.

In some embodiments, the fitting module 20 is configured to fit the (nm+1)-th point to the (N+nm)-th point in the list of fit points to a fit curve, where both n and m are natural numbers more than 0, and 0<m≤N; and nm represents the product of n and m. That is, the points are fit to a curve at an interval of m sample points, and with this preferred embodiment, the accuracy of the identifying apparatus can be improved.

### Sixth Embodiment

Fig.4 is a block diagram of an apparatus for identifying an operation event according to a sixth embodiment of the disclosure, and as illustrated in Fig.4, the apparatus for identifying an operation event includes at least one processor 410, and at least one memory 420 with at least one instruction stored therein, where the at least one instruction is configured to, when executed by the at least one processor 410, cause the apparatus to perform: obtaining sample points of a moving target object; fitting a preset number N of points in a list of fit points to a fit curve; determining whether the distance between each of the sample points and the fit curve is above a preset first threshold; if the distance between a sample point and the fit curve is above the first threshold, then mapping the sample point onto the fit curve to obtain a mapped point of the sample point on the fit curve, and storing the mapped point into the list of fit points, and if the distance between the sample point and the fit curve is below or equal to the first threshold, then storing the sample point into the list of fit points; and identifying the operation event of the target object from the points in the list of fit points.

It shall be noted that the embodiments above of the apparatus are preferred embodiments, and the modules thereof may not be necessary to the disclosure.

The respective embodiments in the description have been described progressively, each of the embodiments has been focused on its differences from the other embodiments, and the description of their commonalities may be applied to each other. Since the embodiments of the apparatus are substantially similar to the embodiments of the method, the embodiments of the apparatus have been described in brief, and for details thereof, reference may be made to the description of the embodiments of the method.

The various aspects, embodiments, implementations or features of the described embodiments can be used separately or in any combination. Further, some aspects of the described embodiments may be implemented by software, hardware, or by a combination of hardware and software. The described embodiments can also be embodied as computer program code stored on a non-transitory computer-readable medium. The computer readable-medium may be associated with any data storage device that can store data, which can thereafter be read by a computer or a computer system. Examples of the computer-readable medium include read-only memory, random-access memory, CD-ROMs, Solid-State Disks (SSD or Flash), HDDs, DVDs, magnetic tape, and optical data storage devices. The computer-readable medium can also be distributed over network-coupled computer systems so that the computer program code may be executed in a distributed fashion.

The foregoing disclosure is merely illustrative of the preferred particular embodiments of the disclosure, but the scope of the disclosure will not be limited thereto, and any variations or substitutions which can readily occur to those skilled in the art without departing from the scope of the disclosure shall fall into the scope of the disclosure. Accordingly the scope of the disclosure shall be as defined in the appended claims.

## Claims

1. A method for identifying an operation event, the method comprising:
obtaining sample points of a moving target object;
fitting a preset number N of points in a list of fit points to a fit curve;
determining whether the distance between each of the sample points and the fit curve is above a preset first threshold;
if the distance between a sample point and the fit curve is above the first threshold, then mapping the sample point onto the fit curve to obtain a mapped point of the sample point on the fit curve, and storing the mapped point into the list of fit points, and
if the distance between the sample point and the fit curve is below or equal to the first threshold, then storing the sample point into the list of fit points; and
identifying the operation event of the target object from the points in the list of fit points.

2. The method for identifying an operation event according to claim 1, wherein fitting the preset number N of points to the fit curve comprises:
fitting the (n+1)-th point to the (N+n)-th point in the list of fit points to a fit curve, wherein n is a natural number.

3. The method for identifying an operation event according to claim 1, wherein fitting the preset number N of points to the fit curve comprises:
fitting the (nm+1)-th point to the (N+nm)-th point in the list of fit points to a fit curve, wherein both n and m are natural numbers more than 0, and 0<m≤N.

4. The method for identifying an operation event according to claim 1, wherein:
the fit curve is a curve to which the points are fit in the Least Square method.

5. The method for identifying an operation event according to claim 1, wherein:
the points in the list of fit points comprise coordinate information in a three-dimension coordinate system.

6. The method for identifying an operation event according to claim 5, wherein determining whether the distance between each of the sample points and the fit curve is above the preset first threshold comprises:
eliminating the coordinates, on one corresponding coordinate axis, of the three-dimension coordinates of the fit curve and the sample point to obtain projections onto a two-dimension plane; and
determining whether the distance between the projection of the sample point, and the projection of the fit curve, onto the two-dimension plane is above the first threshold.

7. The method for identifying an operation event according to claim 6, wherein if the distance between the sample point and the fit curve is above the first threshold, then mapping the sample point onto the fit curve to obtain the mapped point of the sample point on the fit curve comprises:
substituting the coordinate on the coordinate axis corresponding to the movement direction of the target object among the two-dimension coordinates of the projection of the sample point onto the two-dimension plane, into a fit curve function to obtain the mapped point.

8. An apparatus for identifying an operation event, the apparatus comprising:
an obtaining module configured to obtain sample points of a moving target object;
a fitting module configured to fit a preset number N of points in a list of fit points to a fit curve;
a determining module configured to determine whether the distance between each of the sample points and the fit curve is above a preset first threshold;
a first processing module configured, if the distance between a sample point and the fit curve is above the first threshold, to map the sample point onto the fit curve to obtain a mapped point of the sample point on the fit curve, and to store the mapped point into the list of fit points;
a second processing module configured, if the distance between the sample point and the fit curve is below or equal to the first threshold, to store the sample point into the list of fit points; and
an identifying module configured to identify the operation event of the target object from the points in the list of fit points.

9. The apparatus for identifying an operation event according to claim 8, wherein the fitting module is configured to fit the (n+1)-th point to the (N+n)-th point in the list of fit points to a fit curve, wherein n is a natural number.

10. The apparatus for identifying an operation event according to claim 8, wherein the fitting module is configured to fit the (nm+1)-th point to the (N+nm)-th point in the list of fit points to a fit curve, wherein both n and m are natural numbers more than 0, and 0<m≤N.

11. The apparatus for identifying an operation event according to claim 8, wherein:
the fit curve is a curve to which the points are fit in the Least Square method.

12. The apparatus for identifying an operation event according to claim 8, wherein:
the points in the list of fit points comprise coordinate information in a three-dimension coordinate system.

13. The apparatus for identifying an operation event according to claim 12, wherein the determining module comprises:
a coordinate processing sub-module configured to eliminate the coordinates, on one corresponding coordinate axis, of the three-dimension coordinates of the fit curve and the sample point to obtain projections onto a two-dimension plane; and
a determining sub-module configured to determine whether the distance between the projection of the sample point, and the projection of the fit curve, onto the two-dimension plane is above the first threshold.

14. The apparatus for identifying an operation event according to claim 13, wherein the first processing module is configured to substitute the coordinate on the coordinate axis corresponding to the movement direction of the target object among the two-dimension coordinates of the projection of the sample point onto the two-dimension plane, into a fit curve function to obtain the mapped point.

15. A non-transitory computer-readable medium with at least one instruction stored therein,
wherein the at least one instruction is configured to, when executed by at least one processor of an apparatus, cause the apparatus to perform:
obtaining sample points of a moving target object; fitting a preset number N of points in a list of fit points to a fit curve;
determining whether the distance between each of the sample points and the fit curve is above a preset first threshold;
if the distance between a sample point and the fit curve is above the first threshold, then mapping the sample point onto the fit curve to obtain a mapped point of the sample point on the fit curve, and storing the mapped point into the list of fit points, and if the distance between the sample point and the fit curve is below or equal to the first threshold, then storing the sample point into the list of fit points; and
identifying the operation event of the target object from the points in the list of fit points.
